# EUROPEAN PATENT APPLICATION

(11) **EP 1 531 542 A2**
(43) Date of publication of application: **18.05.2005**
(21) Application number: 04026751.0
(22) Date of filing: 10.11.2004
(51) Int. Cl.: H02M 7/521

(54) **Inverter apparatus connected to a plurality of direct current power sources and dispersed-power-source system having inverter apparatus linked to commercial power system to operate**

(30) Priority: 13.11.2003 JP 2003383799
(71) Applicant: Sharp Kabushiki Kaisha, Osaka-shi, Osaka 545-8522 (JP)
(72) Inventor: Nishi, Shunsuke, Katsuragi-shi, Nara (JP)
(74) Representative: Müller - Hoffmann & Partner

(57) **Abstract**

An inverter apparatus (4) includes a plurality of converters (5A-5D) each receiving a direct current power from respective plurality of solar cell arrays (2A-2D) having different output voltage ranges, and an inverter (6) transforming the direct current power from the plurality of converters (5A-5D) into an alternating current power and allowing the alternating current power to reversely flow into a commercial power system (10). The plurality of converters (5A-5D) have different voltage input ranges corresponding to the output voltage ranges of the plurality of solar cell arrays (2A-2D), and each control, based on a pulse frequency modulation control signal received from a corresponding converter control unit, an output voltage of corresponding one of the plurality of solar cell arrays (2A-2D), so that an output power from corresponding one of the plurality of solar cell arrays (2A-2D) becomes maximum.

## Description

This nonprovisional application is based on Japanese Patent Application No. 2003-383799 filed with the Japan Patent Office on November 13, 2003 the entire contents of which are hereby incorporated by reference.

### BACKGROUND OF THE INVENTION

### Field of the Invention

The present invention relates to an inverter apparatus and a dispersed-power-source system, and particularly, to an inverter apparatus that transforms a DC (Direct Current) power received from each of a plurality of DC power sources into an AC (Alternating Current) power and outputs the AC power, and a dispersed-power-source system in which such an inverter apparatus is linked to a commercial power system to operate.

### Description of the Background Art

Conventionally, a dispersed-power-source system linked to a commercial power system has practically been used.. In such a power source system, a DC power outputted from a DC power source such as a solar battery, a storage battery, a power generator or the like is transformed into an AC power, and the transformed AC power is supplied to each household electric appliance. Additionally, it is also possible to allow a surplus power not being consumed in the home to reversely flow into the commercial power system to be sold to an electric power utility company.

As such a dispersed-power-source system, Japanese Patent Laying Open No. 11-318042 discloses a home photovoltaic power generation system in which a solar battery serves as a DC power source.

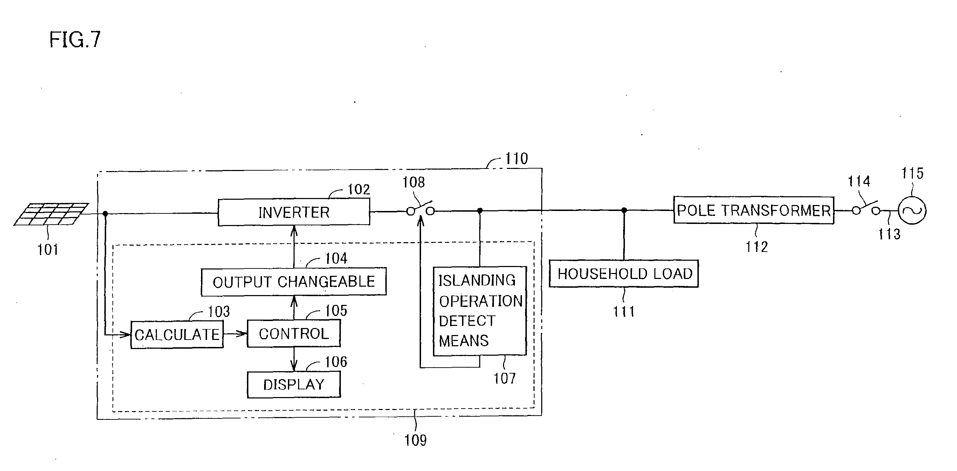

Fig. 7 is a functional block diagram functionally showing a configuration of the home photovoltaic power generation system disclosed in Japanese Patent Laying Open No. 11-3 18042.

Referring to Fig. 7, the home photovoltaic power generation system includes a solar cell array 101, an inverter apparatus 110, a household load 111, a pole transformer 112, a distribution line 113, a breaker 114, and a commercial power system 115. Inverter apparatus 110 includes an inverter circuit 102, a breaker 108, and a microcomputer 109. Microcomputer 109 is formed of calculate means 103, output changeable means 104, control means 105, display means 106, and islanding operation detect means 107.

Solar cell array 101 is a DC power source formed of a solar cell string in which a plurality of solar cell modules are connected in series, and an output power thereof is different depending on the number of the solar cell modules connected in series. Inverter circuit 102 transforms a DC power outputted from solar cell array 101 into an AC power. Breaker 108 disconnects solar cell array 101 and inverter circuit 102 from commercial power system 115 in accordance with an instruction received from islanding operation detect means 107, which will be described later.

Household load 111 generally indicates household electric appliances, and it operates while receiving an AC power from dispersed power sources constituted by solar cell array 101 and inverter apparatus 110. Household load 111 is supplied with an AC power also from commercial power system 115 when power consumption becomes greater than the power supply from the dispersed power sources.

Pole transformer 112 transforms voltage between household load 111 and commercial power system 115. Breaker 114 trips when there is a malfunction in commercial power system 115.

Calculate means 103 in microcomputer 109 calculates power generation of solar cell array 101 based on an output voltage and an output current of solar cell array 101 detected by a sensor that is not shown. Output changeable means 104 changes the output voltage of solar cell array 101 based on an instruction received from control means 105.

Control means 105 receives a power generation value of solar cell array 101 calculated by calculate means 103, and tracks out the output voltage of solar cell array 101 that attains the greatest power generation for every prescribed time. Then, based on thus tracked out output voltage, control means 105 controls output changeable means 104. Display means 106 displays various information related to the dispersed power sources, for example when the amount of power generation of solar cell array 101 1 is abnormal.

Islanding operation detect means 107 monitors frequency fluctuations and/or voltage fluctuations in an AC power, and when it detects great frequency fluctuations and/or voltage fluctuations during an islanding operation in which household load 111 is supplied only with an output power from inverter apparatus 110 because of power failure of commercial power system 115 or the like, it allows breaker 108 to trip so as to stop an output of inverter apparatus 110.

In this home photovoltaic power generation system, when power consumption of household load 111 becomes greater than the output power from inverter apparatus 110, household load 111 is supplied with the output power from inverter apparatus 110 as well as the power from commercial power system 115, purchasing the shortfall from the electric power utility company.

On the other hand, when power consumption of household load 111 becomes smaller than the output power from inverter apparatus 110, surplus power not being consumed in the household load 111 is allowed to reversely flow into commercial power system 115 from inverter apparatus 110 to be sold to the electric power utility company.

Furthermore, during the aforementioned islanding operation, or during an isolated operation in which the dispersed power source operates fully independent from commercial power system 115, household load 111 is supplied only with the output power of inverter apparatus 110.

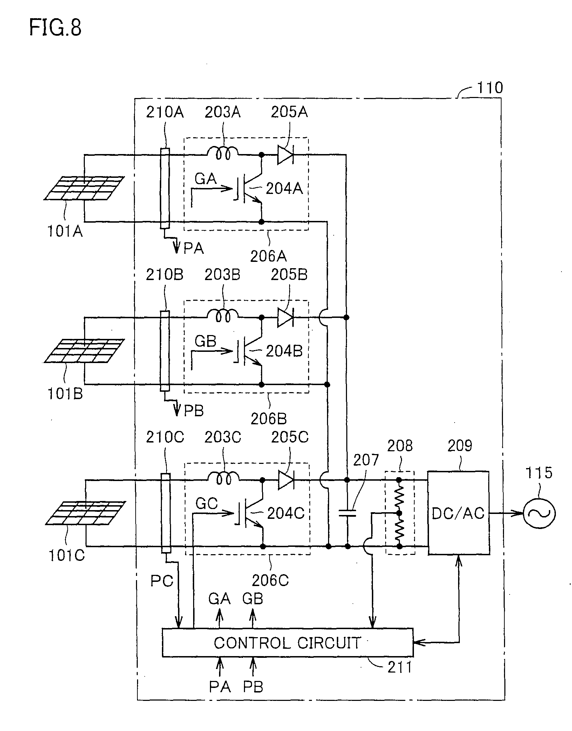

Fig. 8 is a circuit diagram of a substantial portion of inverter apparatus 110 shown in Fig. 7. Here, Fig. 8 shows the circuit diagram of inverter apparatus 110 where solar cell array 101 shown in Fig. 7 is constituted by three solar cell strings.

Referring to Fig. 8, inverter apparatus 110 includes booster choppers 206A-206C, a capacitor 207, a voltage dividing resistor 208, an inverter 209, power detect units 210A-210C, and a control circuit 211. Booster chopper 206A is formed of a reactor 203A, a switching element 204A, and a diode 205A; booster chopper 206B is formed of a reactor 203B, a switching element 204B, and a diode 205B; and booster chopper 206C is formed of a reactor 203C, a switching element 204C, and a diode 205C.

Booster choppers 206A-206C each receive a DC power from respective solar cell arrays 101A-101C independently constituted from one another. Switching elements 204A-204C receive respective control signals GA-GC from control circuit 211, turn on/off according to the duty of respective control signals GA-GC, and thereby each control a current flowing through respective reactors 203A-203C.

Reactors 203A-203C output the energy accumulated therein to capacitor 207 via respective diodes 205A-205C, and capacitor 207 charges the power from reactors 203A-203C.

Inverter 209 receives a DC voltage generated between opposite ends of capacitor 207, transforms it into an AC power synchronizing with commercial power system 115, and outputs the AC power to the commercial power system 115.

Power detect units 210A-210C each detect an output voltage and an output current of respective solar cell arrays 101A-101C, and output thus detected output voltage and output current to control circuit 211. Voltage dividing resistor 208 is provided for detecting a voltage between terminals of capacitor 207, i.e., for detecting an input voltage to inverter 209.

Control circuit 211 calculates an output power of each of solar cell arrays 101A-101C, i.e., an input power of each of booster choppers 206A-206C, based on the output voltage and output current of each of solar cell arrays 101A-101C respectively detected by power detect units 210A-210C, and controls the duty of control signals GA-GC outputted to respective switching elements 204A-204C, so that an input power at each of booster choppers 206A-206C becomes maximum.

Control circuit 211 detects an input voltage to inverter 209, i.e., the voltage between terminals of capacitor 207, using voltage dividing resistor 208. When this detected voltage value is at least at a prescribed protection voltage value, control circuit 211 reduces the duty ratio of control signals GA-GC thereby controls the voltage between terminals of capacitor 207 to be less than the protection voltage value.

Thus, in this inverter apparatus 110, booster choppers 206A-206C each control an output voltage of respective solar cell arrays 101A-101C so that an output power of respective solar cell arrays 101A-101C becomes maximum within the range not exceeding protection voltage value, and inverter 209 transforms, while continuing control of the output voltage of each of booster choppers 206A-206C to be a constant voltage, the DC power outputted from each of booster choppers 206A-206C into an AC power and outputs the AC power to commercial power system 115.

In the home photovoltaic power generation system as described above, in an attempt to install the solar cell modules on the roof of a house as many as possible for improving the power generation while such a roof on which the solar cell array is installed vary in shape, preferably the solar cell array is arranged also on a roof surface of a small area. Specifically, as for roof surfaces of a hipped roof, for example, while roof surfaces facing toward the east and the west have areas generally smaller than that of a roof surface facing toward the south, it is desirable to install an solar cell array also on each of such roof surfaces facing toward the east and the west.

Here, due to the relationship among roof surface areas, the solar cell array installed on each of the east- and west-facing roof surfaces has smaller number of solar cell modules connected in series than the solar cell array installed on the south-facing roof surface has. Therefore, an output voltage range of each of the solar cell arrays respectively installed on the east- and west-facing roof surfaces is smaller than that of the solar cell array installed on the south-facing roof surface.

Considering each of solar cell arrays installed on roof surfaces as one DC power source, it is desirable that the inverter apparatus receiving a DC power from each of a plurality of DC power sources can address a plurality of DC power sources with different output voltage ranges in order to perform efficient power generation.

The inverter apparatus in the home photovoltaic power generation system disclosed in Japanese Patent Laying Open No. 11-318042 is useful as the one that can perform maximum power point tracking for each of a plurality of solar cell arrays (DC power sources) and that can obtain maximum power from each of DC power sources, it cannot address a plurality of DC power sources with different output voltage ranges. In other words, there is a limit on a number of the solar cell modules to be connected in order to keep the output voltage range of each DC power sources within a prescribed input voltage range of inverter apparatus 110.

Then, as for a DC power source having a low output voltage range, a booster circuit may be added to the front stage of the booster chopper that receives a DC power from that DC power source.

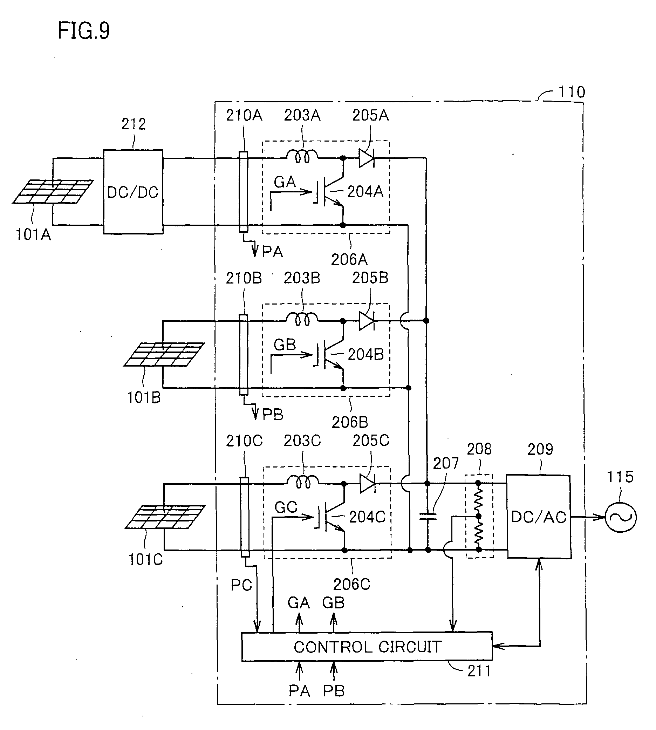

Fig. 9 shows a circuit diagram where a booster circuit is added to the front stage of inverter apparatus 110 in the circuit shown in Fig. 8.

Referring to Fig. 9, solar cell array 101A is low in output voltage range than solar cell arrays 101B, 101C. Between solar cell array 101A and booster chopper 206A in inverter apparatus 110, a booster circuit 212 is provided. Thus, an input voltage of booster chopper 206A can be kept within a prescribed range.

However, when the booster circuit is added to the front stage of inverter apparatus 110 as shown in Fig. 9, costs are increased for that circuit. Moreover, efficiency is reduced also, as the output from the DC power source is obtained via the booster circuit.

Further, in a dispersed-power-source system of a hybrid type including various DC power sources such as not only the solar batteries but also storage batteries, fuel cells, generators and the like, which have different output voltage ranges, the aforementioned problem is more significant. Considering the diversification of the DC power sources of practical use, it is highly advantageous to structure a dispersed-power-source system of a hybrid type that is higher in efficiency and lower in costs.

### SUMMARY OF THE INVENTION

Accordingly, the present invention is made to solve the aforementioned problem, and an object of the present invention is to provide an inverter apparatus that can address a plurality of DC power sources having different output voltage ranges.

Another object of the present invention is to provide a dispersed-power-source system having a system-linked inverter apparatus that can address a plurality of DC power sources having different output voltage ranges.

According to the present invention, an inverter apparatus is an inverter apparatus provided between a plurality of DC power sources and a load for transforming a DC power received from each of the plurality of DC power sources into an AC power and supplying the load with the AC power. The inverter apparatus includes: a plurality of converters each controlling an output voltage of a corresponding DC power source so that the DC power outputted from the corresponding DC power source becomes maximum; and an inverter transforming a combined DC power obtained by combining DC outputs from the plurality of converters into the AC power and outputting the AC power to the load. The plurality of converters include at least one first converter respectively corresponding to at least one first DC power source included in the plurality of DC power sources and each having a first voltage input range, and at least one second converter respectively corresponding to at least one second DC power source included in the plurality of DC power sources, being different from the at least one first DC power source corresponding to the at least one first converter and each having a second voltage input range being different from the first voltage input range.

Preferably, a voltage level of the AC power is a commercial AC voltage, and the inverter is further connected to a commercial power system for outputting the AC power to the load and/or the commercial power system.

Preferably, the at least one first converter each controls, when the DC power received from the corresponding first DC power source exceeds a first prescribed maximum input power value, the output voltage of the corresponding first DC power sources so that the DC power becomes lower than the first prescribed maximum input power value, and the at least one second converter each controls, when the DC power received from the corresponding second DC power source exceeds a second prescribed maximum input power value being different from the first prescribed maximum input power value, the output voltage of the corresponding second DC power source so that the DC power becomes lower than the second prescribed maximum input power value.

Preferably, each of the DC power sources respectively corresponding to the at least one first and second converters is a solar battery, and the at least one first converter is provided as many as the at least one second converter is provided.

Preferably, each of the at least one first and second converters is formed as a unit and capable of being attached and removed to and from the inverter apparatus by the unit.

Further, according to the present invention, a dispersed-power-source system includes a plurality of DC power sources; a load; and a system-linked inverter apparatus provided between the plurality of DC power sources and the load as well as a commercial power system for transforming a DC power received from each of the plurality of DC power sources into an AC power and supplying the load and/or the commercial power system with the AC power. The system-linked inverter apparatus includes: a plurality of converters each controlling an output voltage of a corresponding DC power source so that the DC power outputted from the corresponding DC power source becomes maximum; and an inverter transforming a combined DC power obtained by combining DC outputs from the plurality of converters into the AC power and outputting the AC power to the load and/or the commercial power system. The plurality of converters include at least one first converter respectively corresponding to at least one first DC power source included in the plurality of DC power sources and each having a first voltage input range, and at least one second converter respectively corresponding to at least one second DC power source included in the plurality of DC power sources, being different from the at least one first DC power source corresponding to the at least one first converter and each having a second voltage input range being different from the first voltage input range.

Preferably, the system-linked inverter apparatus further includes a sensor detecting a malfunction in the commercial power system, and a control circuit stopping, when the sensor detects a malfunction in the commercial power system, an operation of the system-linked inverter apparatus.

Preferably, the plurality of DC power sources include different types of power generation apparatuses.

According to the present invention, as an inverter apparatus including a plurality of converters having different input voltage ranges is included, it is not necessary to provide a booster circuit to the front stage of the inverter apparatus for the adjustment to an input voltage range. Accordingly, costs can be suppressed and reduction of efficiency due to provision of the booster circuit will not occur.

Additionally, the inverter apparatus and the dispersed-power-source system according to the present invention can be applied to a home power generation system that transforms a DC power from a plurality of DC power sources constituted of solar batteries, fuel cells, generators or the like into a commercial AC power and outputs this AC power to a household load, and that allows the AC power to reversely flow into the commercial power system. The inverter apparatus and the dispersed-power-source system according to the present invention are not limited to home use, and they can be utilized for an industrial power generation system.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an overall block diagram showing a configuration of a dispersed-power-source system according to a first embodiment of the present invention.
Fig. 2 is a circuit diagram showing a configuration of an inverter apparatus shown in Fig. 1.
Fig. 3 is a circuit diagram showing a configuration of a converter shown in Fig. 2 in detail.
Fig. 4 is an operation waveform diagram of switching elements in the inverter shown in Fig. 2.
Fig. 5 is an overall block diagram showing another configuration of the dispersed-power-source system according to the first embodiment of the present invention.
Fig. 6 is an overall block diagram showing a configuration of a dispersed-power-source system according to a second embodiment of the present invention.
Fig. 7 is a functional block diagram functionally showing a configuration of a home photovoltaic power generation system disclosed in Japanese Patent Laying Open No. 11-318042.
Fig. 8 is a circuit diagram of a substantial portion of an inverter apparatus shown in Fig. 7.
Fig. 9 is a circuit diagram where a booster circuit is added to the front stage of the inverter apparatus in the circuit shown in Fig. 8.

### DESCRIPTION OF THE PREFERRED EMBODIMENTS

In the following, referring to the drawings, embodiments of the present invention will be described in detail. Throughout the drawings, identical or corresponding parts are denoted by the identical reference character, and description thereof will not be repeated.

### First Embodiment

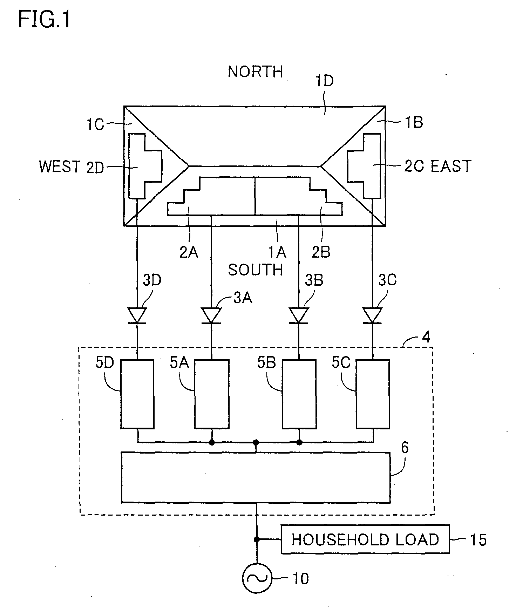

Fig. 1 is an overall block diagram showing a configuration of a dispersed-power-source system according to a first embodiment of the present invention.

Referring to Fig. 1, the dispersed-power-source system according to the first embodiment includes solar cell arrays 2A-2D, diodes 3A-3D, an inverter apparatus 4, a household load 15, and a commercial power system 10. Inverter apparatus 4 includes converters 5A-5D and an inverter 6.

Solar cell arrays 2A-2D are arranged, on a hipped roof of a house, at a portion positioned on the west side in a roof surface 1A facing toward the south, at a portion positioned on the east side in roof surface 1A facing toward the south, at a roof surface 1B facing toward the east, and at a roof surface 1C facing toward the west, respectively. Solar cell arrays 2A-2D are each constituted by a plurality of solar cell modules each having a maximum output voltage of about 10.5 V, for example, serially connected in a number according to the area of respective roof surfaces.

For example, solar cell arrays 2A, 2B arranged at roof surface 1A that faces toward the south, receiving large amount of solar radiation and having a large area, are each constituted by about 22 pieces of solar cell modules connected in series, while solar cell arrays 2C, 2D arranged at roof surface 1B facing toward the east and roof surface 1C facing toward the west, respectively, receiving small amount of solar radiation and having small area as compared to the south side, are each constituted by about 7 pieces of solar cell modules connected in series.

Accordingly, solar cell arrays 2A, 2B and solar cell arrays 2C, 2D are different in output voltage range and output power range. Specifically, under a certain solar radiation condition, solar cell arrays 2A, 2B each output a DC voltage of about 230V, while solar cell arrays 2C, 2D each output a DC voltage of about 70V. It should be noted that no solar cell array is arranged at roof surface 1D facing toward the north, as it receives small amount of solar radiation as compared to the other roof surfaces.

Diodes 3A-3D prevent reverse flow of power from inverter apparatus 4 to solar cell arrays 2A-2D, and protect solar cell arrays 2A-2D from the reverse current.

Converters 5A-5D each receive a DC power outputted from respective solar cell arrays 2A-2D. While controlling an output voltage of respective solar cell arrays 2A-2D so that the output power of respective solar cell arrays 2A-2D becomes maximum, converters 5A-5D boost the output voltage of respective solar cell arrays 2A-2D to a prescribed voltage, and output the boosted voltage.

Here, solar cell arrays 2A-2D respectively connected to converters 5A-5D each have a different output voltage, and an input voltage range of each of converters 5A, 5B is designed to be 80V-320V, while an input voltage range of each of converters 5C, 5D is designed to be 50V-160V. Accordingly, the output voltages of solar cell arrays 2A-2D, i.e., the input voltages of converters 5A-5D, will not deviate from the input voltage ranges of converters 5A-5D, respectively, and it is not necessary to provide booster circuits between solar cell arrays 2C, 2D having low output voltages and converters 5C, 5D, respectively, as described in Description of the Background Art.

Inverter 6 receives a DC power, which is a combined DC power of every DC power outputted from each of converters 5A-5D. Inverter 6 continues control of the input voltage to be a DC voltage of, for example, about 330V-350V, and transforms the received DC power into a commercial AC power formed of a commercial voltage, and supplies this AC power to household load 15 and/or commercial power system 10.

Thus, inverter apparatus 4 in the dispersed-power-source system includes a plurality of converters having different input voltage ranges, and therefore it can transform a DC power outputted from each of a plurality of DC power sources having different output voltage ranges into a commercial AC power, without providing a booster circuit at a front stage or imposing limit on a number of solar cell modules to be connected for constituting an solar cell array.

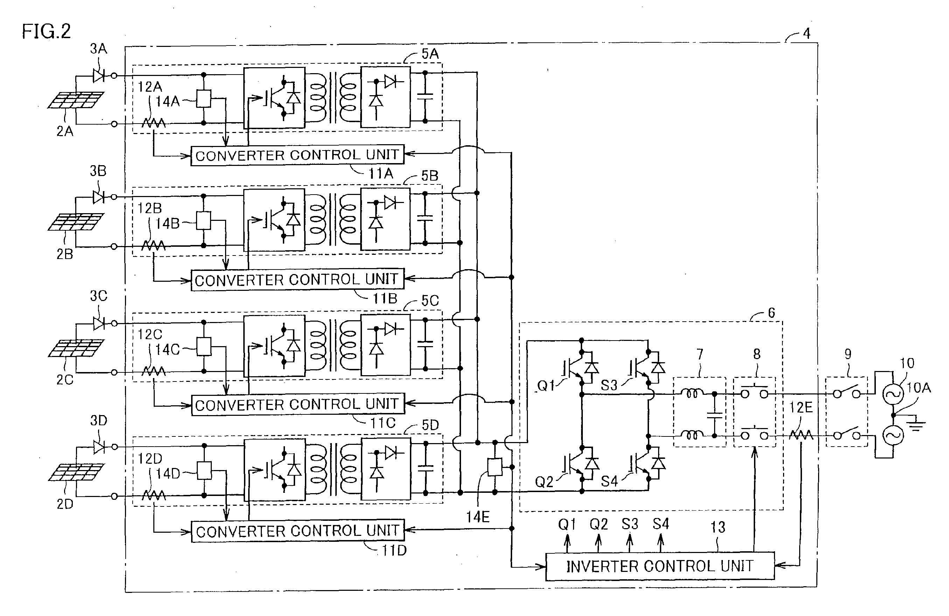

Fig. 2 is a circuit diagram showing a configuration of inverter apparatus 4 shown in Fig. 1.

Referring to Fig. 2, inverter apparatus 4 includes converters 5A-5D, inverter 6, converter control units 11A-11D provided corresponding to converters 5A-5D, respectively, an inverter control unit 13, a voltage sensor 14E, and a current sensor 12E. Converters 5A-5D are provided with voltage sensors 14A-14D each detecting a voltage of the input side, and current sensors 12A-12D each detecting a current of the input side, respectively.

Each of converters 5A-5D is a DC-DC converter formed of a switching element, a high-frequency transformer, a rectifier diode, and an output capacitor. Converters 5A-5D each receive a PFM (Pulse Frequency Modulation) control signal of which switching frequency is about 15 kHz-70 kHz from respective corresponding converter control units 11A-11D. Each switching element turns on/off in accordance with this PFM control signal, whereby an input voltage is boosted to a prescribed output voltage.

Actually, as described later, an output voltage of each of converters 5A-5D is controlled to be a constant voltage, for example, of about 330V-350V by inverter 6. Therefore, converters 5A-5D each change an operating point of the input voltage, i.e., the output voltage of corresponding one of solar cell arrays, in accordance with the duty of PFM control signal received from respective corresponding converter control units 11A-11D.

Converter control unit 11A receives detection values of an input voltage and an output voltage of converter 5A from voltage sensors 14A, 14E, respectively, and receives detection value of an input current of converter 5A from current sensor 12A. Converter control unit 11A controls the pulse width of the PFM control signal so that the input voltage of converter 5A falls within the range of 80V-320V, and outputs this PFM control signal to converter 5A. When the input voltage of converter 5A deviates from the aforementioned input voltage range, converter control unit 11A stops the operation of converter 5A.

Converter control unit 11B receives detection values of an input voltage and an output voltage of converter 5B from voltage sensors 14B, 14E, respectively, and receives detection value of an input current of converter 5B from current sensor 12B. Converter control unit 11B controls the pulse width of the PFM control signal so that the input voltage of converter 5B falls within the range of 80V-320V, and outputs this PFM control signal to converter 5B. When the input voltage of converter 5B deviates from the aforementioned input voltage range, converter control unit 11B stops the operation of converter 5B.

Converter control unit 11C receives detection values of an input voltage and an output voltage of converter 5C from voltage sensors 14C, 14E, respectively, and receives detection value of an input current of converter 5C from current sensor 12C. Converter control unit 11C controls the pulse width of the PFM control signal so that the input voltage of converter 5C falls within the range of 50V-160V, and outputs this PFM control signal to converter 5C. When the input voltage of converter 5C deviates from the aforementioned input voltage range, converter control unit 11C stops the operation of converter 5C.

Converter control unit 11D receives detection values of an input voltage and an output voltage of converter 5D from voltage sensors 14D, 14E, respectively, and receives detection value of an input current of converter 5D from current sensor 12D. Converter control unit 11D controls the pulse width of the PFM control signal so that the input voltage of converter 5D falls within the range of 50V-160V, and outputs this PFM control signal to converter 5D. When the input voltage of converter 5D deviates from the aforementioned input voltage range, converter control unit 11D stops the operation of converter 5D.

Here, converter control units 11A-11D each calculate an output power of respective solar cell arrays 2A-2D based on corresponding input voltage detection value and input current detection value, and control respective converters 5A-5D so that the output power of respective solar cell arrays 2A-2D becomes maximum. Specifically, converter control units 11A-11D each control the pulse width of PFM control signal so that the output power of respective solar cell arrays 2A-2D becomes maximum, and output the PFM control signal to respective converters 5A-5D.

Converter control units 11A-11D control converters 5A-5D, respectively, when the output voltage detection value received from voltage sensor 14E exceeds a prescribed protection voltage value, so that the output voltage of respective converters 5A-5D becomes smaller than this prescribed protection voltage value. Specifically, converter control units 11A-11D each control the pulse width of PFM control signal so as to reduce the input power of respective converters 5A-5D.

Further, a maximum input power is determined for each of the converters. When a calculated input power of each of converters 5A-5D exceeds the corresponding maximum input power value, converter control units 11A-11D respectively control converters 5A-5D so that the input power of each of converters 5A-5D becomes smaller than the maximum input power values. Specifically, when the maximum input power value for each of converter control units 11A, 11B is determined as 1.6kW, and the maximum input power value for each of converter control units 11C, 11D is determined as 800W, for example, converter control units 11A-11D each compare the calculated input power with the aforementioned corresponding maximum input power value, and when the input power exceeds the maximum input power value, converter control units 11A-11D each stop maximum power point tracking control, and each control the pulse width of PFM control signal so as to reduce the input power, i.e., the output power of respective solar cell arrays 2A-2D.

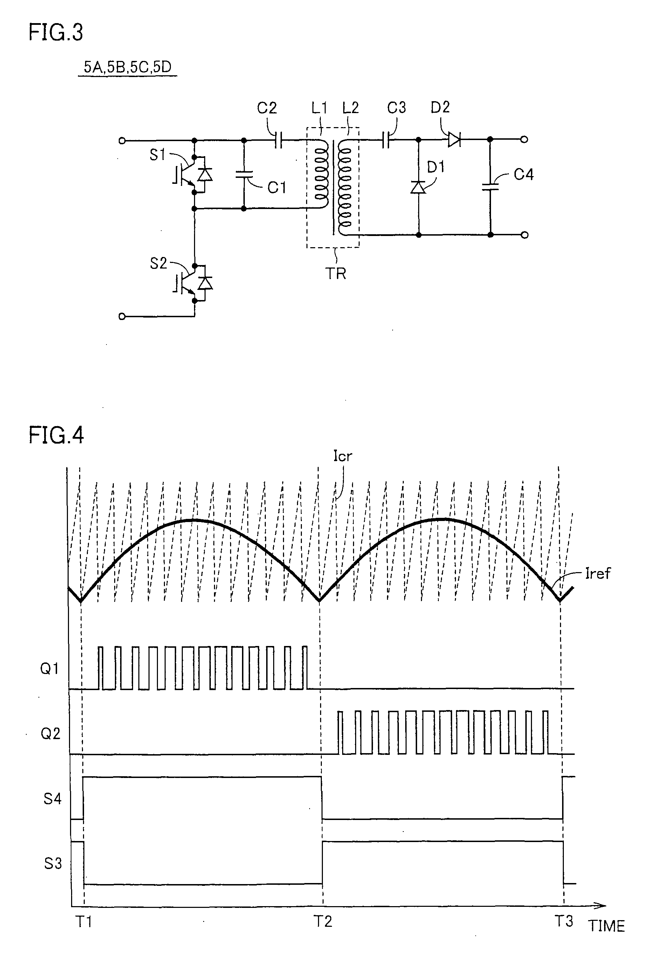

Fig. 3 is a circuit diagram showing a configuration of converters 5A-5D shown in Fig. 2 in detail.

Referring to Fig. 3, converters 5A-5D are each formed of switching elements S1, S2, diodes D1, D2, capacitors C1-C4, and an insulation transformer TR. Switching elements S1, S2 are each constituted by, for example, an IGBT (Insulated Gate Bipolar Transistor), which withstands voltage excellently, low in on-voltage and capable of performing high-speed switching. Switching elements S1, S2 each receive a PFM control signal at the base terminal outputted from the corresponding converter control unit. Insulation transformer TR is formed of a primary coil L1 and a secondary coil L2. Diodes D1 and D2 constitute a rectifier circuit.

Each of converters 5A-5D is a current resonance type soft switching PFM converter, in which switching element S1 serves as a main switch, switching element S2 serves as an auxiliary switch, and a resonance current generated by the leakage inductance of primary coil L1 and capacitor C2 is used. As described above, the switching frequency of switching elements S1, S2 is about 15 kHz-70 kHz, and an output voltage of each of converters 5A-5D is controlled to be about 330V-350V by inverter 6, which will be described later.

Referring to Fig. 2 again, inverter 6 is formed of switching elements Q1, Q2, S3, S4, a low-pass filter 7, and a link relay 8. Switching elements Q1, Q2, S3, S4 are each constituted by, for example an IGBT, similarly to switching elements S1, S2 in each of converters 5A-5D.

Switching elements Q1, Q2 each receive a PWM (Pulse Width Modulation) signal having a switching frequency of about 19kHz from inverter control unit 13, and turn on/off in accordance with the PWM control signal, thereby transform DC input power into an AC power synchronized with the commercial frequency.

Here, as the output voltage of inverter 6 is fixed to a constant commercial system voltage, inverter 6 changes an output current in accordance with the pulse width of the PWM control signal received from inverter control unit 13, thereby controls the input voltage, i.e., the output voltage of each of converters 5A-5D, to a constant voltage of about 330V-350V.

Switching elements S3, S4 each receive a switching signal switching to a different logic level according to the commercial frequency from inverter control unit 13, and turn on/off in accordance with the switching signal, thereby form an AC current.

Low-pass filter 7 removes noise components from the AC current in inverter 6, and shapes the waveform of the generated AC current to be a sine wave. Link relay 8 disconnects inverter 6 from commercial power system 10 when there is a malfunction.

Inverter control unit 13 receives a detection value of an input voltage of inverter 6 from voltage sensor 14E, and receives a detection value of an output current of inverter 6 from current sensor 12E. Then, inverter control unit 13 controls the pulse width of a PWM control signal so that the input voltage of inverter 6 attains about 330V-350V, and outputs that PWM control signal to each of switching elements Q1, Q2. Additionally, inverter control unit 13 outputs a switching signal switching to a different logic level according to the commercial frequency of commercial power system 10 to each of switching elements S3, S4.

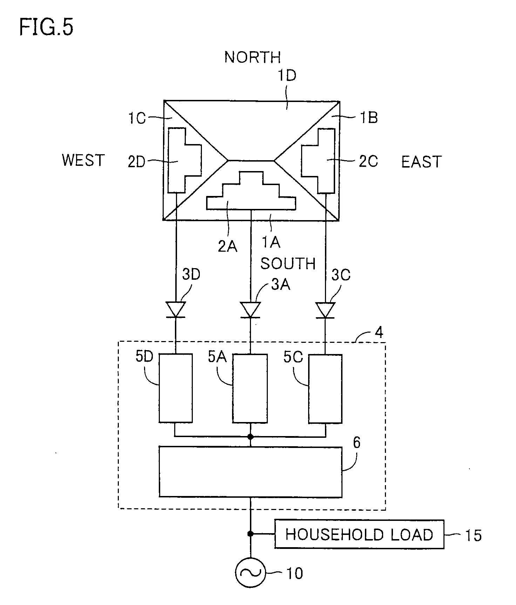

Fig. 4 is an operation waveform diagram of switching elements Q1, Q2, S3, S4 in inverter 6 shown in Fig. 2.

Referring to Fig. 4, inverter control unit 13 detects an output current of a circuit constituted by switching elements Q1, Q2, S3, S4, and generates a current instruction Iref of PWM based on this output current. Then, inverter control unit 13 compares this current instruction Irefwith a carrier signal Icr being generated internally. Here, this carrier signal Icr is a sawtooth wave as shown in the figure.

Inverter control unit 13 detects a voltage of commercial power system 10, and detects a zero-cross point of the system voltage. Then, inverter control unit 13 generates a switching signal for switching on/off switching elements S3, S4 alternately for every half cycle of the commercial frequency based on the detected zero-cross point, and outputs the generated switching signal to each of switching elements S3, S4.

Then, inverter control unit 13 generates a PWM control signal formed of the pulse width determined according to the comparison result between current instruction Iref and carrier signal Icr. When switching element S4 is on, inverter control unit 13 outputs the generated PWM control signal to switching element Q1, and when switching element S3 is on, inverter control unit 13 outputs the generated PWM control signal to switching element Q2.

Referring to Fig. 2 again, inverter control unit 13 further performs protection coordination control with commercial power system 10. Specifically, inverter control unit 13 monitors the system voltage or the system frequency, for example, and when any of these value attains at least a prescribed threshold value, it stops the operation of inverter apparatus 4 within a determined operation time.

Additionally, inverter control unit 13 has an islanding operation detect function as the protection coordination control. The islanding operation detect function is a function for stopping the operation of inverter apparatus 4 when great frequency fluctuations and/or voltage fluctuations due to power failure of commercial power system 10 or the like is detected during the islanding operation. As the detection scheme, the voltage-phase-jump detection scheme and the frequency shift scheme can both be employed. The former is a passive detection scheme for detecting a sudden change of the voltage phase due to imbalance of power generation output and loads when entering the islanding operation. The latter is an active detection scheme for detecting fluctuations in the frequency by, for example, normally applying a slight frequency bias to an output current.

As another protection coordination control, inverter control unit 13 has: a voltage increase suppression function for suppressing an increase in the voltage at the power receiving point of the system, which would occur by inverter apparatus 4 allowing a current to reversely flow to commercial power system 10, by decreasing an output current; a DC component flow-out prevention function for stopping inverter apparatus 4 when DC component included in an output current exceeds a prescribed threshold value; an output overcurrent detect function for stopping inverter apparatus 4 when an output current itself exceeds a prescribed threshold value; and the like.

In this inverter apparatus 4, when the supply of DC power from solar cell arrays 2A-2D to inverter apparatus 4 is started, converters 5A-5D are each actuated. Converter control units 11A-11D each increase the pulse width of a PFM control signal, thereby increase an output voltage of respective converters 5A-5D. When each of the output voltage attains about 350V, inverter 6 is actuated.

Inverter 6 transforms a DC power outputted from each of converters 5A-5D into an AC power and outputs the AC power. The AC power outputted from inverter 6 is supplied to commercial power system 10 and household loads, which are not shown, via leakage breaker 9. Additionally, inverter 6 controls an input voltage, i.e., the output voltage of each of converters 5A-5D to be about 330V-350V by increasing or decreasing the output current.

Here, as the output voltage of each converters 5A-5D is controlled by inverter 6 to be a constant voltage, by changing the pulse width of a PFM control signal by a corresponding converter control unit, an operating point of an input voltage can be changed. Thus, converters 5A-5D each changes an input voltage so that the output power from a corresponding solar cell array becomes maximum, based on the PFM control signal received from the corresponding converter control unit.

As described above, as for roof surfaces of a hipped roof or the like, roof surfaces facing toward the east and the west have areas generally smaller than that of a roof surface facing toward the south. Therefore, as shown in Figs. 1 and 2, the proportion of converters with higher input voltage range (converters 5A, 5B) and converters with lower input voltage range (converters 5C, 5D) in inverter apparatus 4 is desirable to be 1:1 in accordance with the formation of the roof surfaces of such a hipped roof.

It is also possible to form each of converters 5A-5D as a unit in inverter apparatus 4, and to have a structure that can be attached or removed to/from inverter apparatus 4. Formation of converters 5A-5D as units enables such a structure of the dispersed-power-supply system that flexibly addresses to the shape of the roof or the solar radiation condition.

As one example, Fig. 5 shows an overall block diagram showing another configuration of a dispersed-power-source system according to the first embodiment of the present invention.

Referring to Fig. 5, a house to which the dispersed-power-source system is installed has a roof surface facing toward the south, of which area is smaller than that of the house shown in Fig. 1. Accordingly, in this dispersed-power-source system, in the configuration of the dispersed-power-source system shown in Fig. 1, only solar cell array 2A is arranged on the roof surface facing toward the south. Correspondingly, in inverter apparatus 4, converter 5B is unnecessary and therefore removed by the entire unit. Thus, by forming each of converters 5A-5D as a unit, a dispersed-power-source system suitable to each house is structured, while suppressing the costs.

It should be noted that, while converters 5A-5D have been described as DC-DC converters in the foregoing, converters 5A-5D are not limited to DC-DC converters. Though the aforementioned DC-DC converter has an insulation transformer capable of insulating DC power sources and a commercial power system and excellent in safety, other converter without a transformer may be employed.

Further, the voltage value, the current value, the switching frequency and the like described above are examples, and other values may be employed.

As described above, according to the first embodiment, as an inverter apparatus including a plurality of converters having different input voltage ranges is included, it is not necessary to provide a booster circuit to the front stage of the inverter apparatus for adjustment to an input voltage range. Accordingly, costs can be suppressed and reduction of efficiency due to provision of the booster circuit will not occur.

Additionally, as the maximum input power is defined for each converter according to the size of a DC power source, an excessive input current can be prevented. Further, as components can be selected taking account of the maximum input power or the input voltage range of each converter, efficiency of transformation can be improved.

Still further, by setting the proportion of converters with higher input voltage range and converters with lower input voltage range to be 1:1, a dispersed-power-source system in which solar cell arrays as DC power sources are arranged can efficiently be structured, particularly on the roof surfaces of a hipped roof.

Still further, by forming each of the converters as a unit, converters with different input voltage ranges can appropriately be combined according to the system, and therefore a dispersed-power-source system addressing install conditions or usage conditions can easily be structured.

### Second Embodiment

In a second embodiment, a dispersed-power-source system of a hybrid type in which solar cell arrays and fuel cells are used as DC power sources is shown.

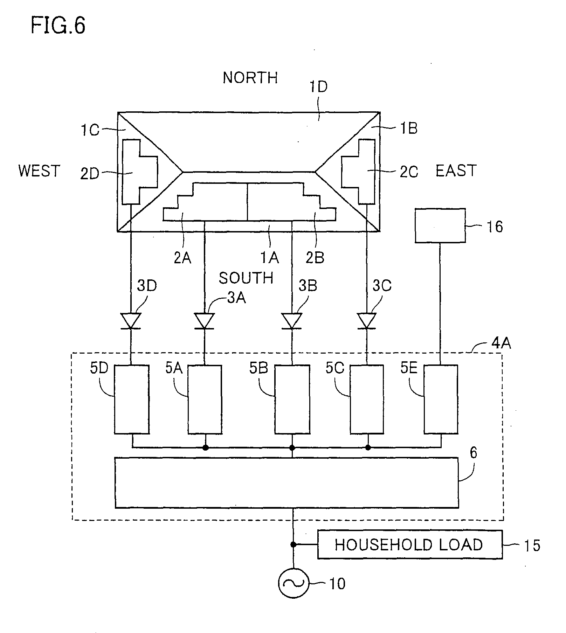

Fig. 6 is an overall block diagram showing a configuration of a dispersed-power-source system according to a second embodiment of the present invention.

Referring to Fig. 6, the dispersed-power-source system according to the second embodiment further includes a fuel cell 16 in the configuration of the dispersed-power-source system according to the first embodiment shown in Fig. 1 and includes an inverter apparatus 4A in place of inverter apparatus 4. Inverter apparatus 4A further includes converter 5E in the configuration of inverter apparatus 4 shown in Fig. 1.

Fuel cell 16 outputs a DC power, and for example, an output voltage is 30V-60V, and output power is at most 1kW. Converter 5E receives the DC power outputted from fuel cell 16. Converter 5E continues control of an output voltage of fuel cell 16 so that the output power of fuel cell 16 becomes maximum, and boosts the output voltage of that fuel cell 16 to a prescribed voltage controlled by inverter 6, and outputs the boosted voltage.

Here, converter 5E is designed to have an input voltage range of 25V-65V and maximum input power value of 1.5kW, taking account of the aforementioned output characteristics of fuel cell 16. Accordingly, it is not necessary to provide a booster circuit between fuel cell 16, which is lower in output voltage than solar cell arrays 2A-2D, and converter 5E.

Converter 5E may also be formed as a unit, similarly to converters 5A-5D, and may be formed to have a structure that can be attached or removed to/from inverter apparatus 4A. By forming the converter as a unit, the optimum and simple dispersed-power-supply system can be structured, selecting a unit having necessary input voltage range and maximum input power value corresponding to DC power sources as appropriate.

It should be noted that since the rest of the configuration of the dispersed-power-source system according to the second embodiment is the same as the dispersed-power source system according to the first embodiment, description thereof is not repeated.

As described above, according to the second embodiment, a dispersed-power-source system of a hybrid type can easily be structured with low costs and without reduction of efficiency.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An inverter apparatus (4, 4A) provided between a plurality of direct current power sources (2A-2D, 16) and a load (15) for transforming a direct current power received from each of said plurality of direct current power sources (2A-2D, 16) into an alternating current power and supplying said load (15) with said alternating current power, comprising:
a plurality of converters (5A-5E) each controlling an output voltage of a corresponding direct current power source so that the direct current power outputted from said corresponding direct current power source becomes maximum; and
an inverter (6) transforming a combined direct current power obtained by combining direct current outputs from said plurality of converters (5A-5E) into said alternating current power and outputting said alternating current power to said load (15), wherein
said plurality of converters (5A-5E) include
at least one first converter (5A, 5B) respectively corresponding to at least one first direct current power source (2A, 2B) included in said plurality of direct current power sources (2A-2D, 16) and each having a first voltage input range, and
at least one second converter (5C-5E) respectively corresponding to at least one second direct current power source (2C, 2D, 16) included in said plurality of direct current power sources (2A-2D, 16), being different from said at least one first direct current power source (2A, 2B) corresponding to said at least one first converter (5A, 5B) and each having a second voltage input range being different from said first voltage input range.

2. The inverter apparatus according to claim 1, wherein
a voltage level of said alternating current power is a commercial alternating current voltage, and
said inverter (6) is further connected to a commercial power system (10) for outputting said alternating current power to said load (15) and/or said commercial power system (10).

3. The inverter apparatus according to claim 1, wherein
said at least one first converter (5A, 5B) each controls, when the direct current power received from the corresponding first direct current power source (2A, 2B) exceeds a first prescribed maximum input power value, the output voltage of the corresponding first direct current power source (2A, 2B) so that the direct current power becomes lower than said first prescribed maximum input power value, and
said at least one second converter (5C-5E) each controls, when the direct current power received from the corresponding second direct current power source (2C, 2D, 16) exceeds a second prescribed maximum input power value being different from said first prescribed maximum input power value, the output voltage of the corresponding second direct current power source (2C, 2D, 16) so that the direct current power becomes lower than said second prescribed maximum input power value.

4. The inverter apparatus according to claim 1, wherein
each of the direct current power sources (2A-2D) respectively corresponding to said at least one first and second converters (5A-5D) is a solar battery, and
said at least one first converter (5A, 5B) is provided as many as said at least one second converter (5C, 5D) is provided.

5. The inverter apparatus according to claim 1, wherein
each of said at least one first and second converters (5A-5E) is formed as a unit and capable of being attached and removed to and from the inverter apparatus (4, 4A) by said unit.

6. A dispersed-power-source system, comprising:
a plurality of direct current power sources (2A-2D, 16);
a load (15); and
a system-linked inverter apparatus (4, 4A) provided between said plurality of direct current power sources (2A-2D, 16) and said load (15) as well as a commercial power system (10) for transforming a direct current power received from each of said plurality of direct current power sources (2A-2D, 16) into an alternating current power and supplying said load (15) and/or said commercial power system (10) with said alternating current power, wherein
said system-linked inverter apparatus (4, 4A) includes
a plurality of converters (5A-5E) each controlling an output voltage of a corresponding direct current power source so that the direct current power outputted from said corresponding direct current power source becomes maximum, and
an inverter (6) transforming a combined direct current power obtained by combining direct current outputs from said plurality of converters (5A-5E) into said alternating current power and outputting said alternating current power to said load (15) and/or said commercial power system (10), wherein
said plurality of converters (5A-5E) include
at least one first converter (5A, 5B) respectively corresponding to at least one first direct current power source (2A, 2B) included in said plurality of direct current power sources (2A-2D, 16) and each having a first voltage input range, and
at least one second converter (5C-5E) respectively corresponding to at least one second direct current power source (2C, 2D, 16) included in said plurality of direct current power sources (2A-2D, 16), being different from said at least one first direct current power source (2A, 2B) corresponding to said at least one first converter (5A, 5B) and each having a second voltage input range being different from said first voltage input range.

7. The dispersed-power-source system according to claim 6, wherein
said system-linked inverter apparatus (4, 4A) further includes
a sensor detecting a malfunction in said commercial power system (10), and
a control circuit (13) stopping, when said sensor detects a malfunction in said commercial power system (10), an operation of the system-linked inverter apparatus (4, 4A).

8. The dispersed-power-source system according to claim 6, wherein
said plurality of direct current power sources (2A-2D, 16) include different types of power generation apparatuses.
